# EUROPEAN PATENT APPLICATION

(11) **EP 1 693 776 A1**
(43) Date of publication of application: **23.08.2006**
(21) Application number: 05250986.6
(22) Date of filing: 22.02.2005
(51) Int. Cl.: G06K 7/00

(54) **Pin system for 5-in-1 connector for memory cards**

(71) Applicant: WEM Technology Inc., Taipei (TW)
(72) Inventor: Hsiao, Wen-Hsiang, Taipei (TW)
(74) Representative: Prentice, Raymond Roy

(57) **Abstract**

The present invention has a main body (11) provided with a first and a second insertion slot (12, 13); a first connecting pin set (141) is provided at the middle section in the way of insertion inside the first insertion slot (12) to connect one of the SD memory card, the MMC memory card and the RSMMC memory card with the circuit of a connector (10), and a second connecting pin set (142) is provided at a deeper area in the way of insertion inside the first insertion slot (12) to connect the mini SD memory card wi th the circuit of the connector (10), and further a third connecting pin set is provided in the second insertion slot (13) to connect the TF memory card with the circuit of the connector (10). In this mode, the connector (10) for inserting and to make circuit connection of an SD (an MMC, an RCMMC, a mini SD) and a TF memory card with an electric device can be completed.

## Description

### BACKGROUND OF THE INVENTION

### 1. Field of the Invention

The present invention is related to an improved system for pin arrangement and composition of a connector for memory cards, and especially to a 5-in-1 connector to make circuit connection of an SD memory card (Secure Digital Card), an MMC memory card (MultiMedia Card), an RCMMC memory card (Reduced Size MultiMedia Card), a mini SD memory card (mini-Secure Digital Card) and a TF memory card (TransFlash card) with an electric device.

### 2. Description of the Prior Art

In the recent years, storing carriers of the type of memory cards (or called as flash memory cards) has superior features of being light, thin and small, having high storing capabilities, vibration durability and repeated memorizing for many times etc. , thereby they are widely applied on household electric appliances of information, personal computers or portable digital products (hereinafter unitarily called as electric devices).

Normal electric devices using memory cards (such as digital cameras, PDA's and digital walkmans etc.) as storing carriers basically still take memory cards of specific types as data storing carriers, the most popular memory card types include CF cards (CompactFlash cards), SM cards (Smart Media Cards), MS cards (Memory Stick Cards), SD cards (Secure Digital Cards), MMC cards (MultiMedia Cards), RSMMC cards (Reduced-Size MultiMedia Cards) etc. , and even there are mini SDmemory cards (mini-Secure Digital Cards) in the markets specific for cell phones and TF memory cards (TransFlash cards).

Hence for the masses of consumers, as a matter of course, a memory card is unable to effectively make communication among the electric devices including portable digital products, computer systems and peripheral equipment of computers etc. , and even limitations are created in selecting and purchasing products of consumers; as a result, partial manufacturers of memory cards developed memory cards coincident with the existed memory cards in specifications but having smaller sizes, in order to meet the portable digital electric devices with smaller volumes in use; for example, SD cards and MMC cards are memory cards with same contour sizes; while the chips and specifications of circuits (transmission protocol) of RSMMC memory cards are same as those of MMC memory cards, but their contour sizes are slightly smaller than those of the MMC memory cards; similarly, the chips and specifications of circuits of mini SD memory cards are same as those of SD memory cards, but their contour sizes are slightly smaller than those of the SD memory cards.

By the fact that the contours of RSMMC memory cards and mini SD memory cards are slightly different from those of MMC memory cards and SD memory cards; for the existed techniques presently, there has been a connector simultaneously common to four types of memory cards including an SD, an MMC, an RSMMC and a mini SD memory card; however, there has not yet been a connector suitable for inserting therein a TF memory card. In view of this, promotion of TF memory cards still has its limitation because of the condition of compatibility.

Moreover, a connector simultaneously common to multiple types of memory cards itself not only must be provided with insertion slots (or related positioning structures) for positioning corresponding types of memory cards, but also must especially be provided with a good designed pin system, in order to make sure connection of an electric device with its corresponding types of memory cards.

Various connectors each common to multiple types of memory cards simultaneously for connecting with multiple types of memory cards in the markets are limited in the problem of designing pin systems, that renders most memory cards for each connector to be not faced to an identical orientation when the memory cards are inserted in the connector; i.e., some memory cards are inserted normally with the pins of the memory cards facing downwards, and some memory cards are inserted in a contrary direction with the pins of the cards facing upwards. In this way, a consumer is subjected to being confused, he shall often make sure whether the direction is correct for a normal direction and a contrary direction, this is quite inconvenient in use.

### SUMMARY OF THE INVENTION

Therefore, a pin system for a 5-in-lconnector for memory cards of the present invention has, in addition to a first insertion slot for inserting and positioning one of an SD memory card, an MMC memory card, an RSMMC memory card and a mini SD memory card as well as a second insertion slot for inserting and positioning a TF memory card, a first connectingpin set provided at the middle section in the way of insertion inside the first insertion slot to connect one of the SD memory card, the MMC memory card and the RSMMC memory card with the circuit of a connector as well as a second connecting pin set provided at a deeper area in the way of insertion inside the first insertion slot to connect the mini SD memory card with the circuit of the connector, and further a third connecting pin set provided in the second insertion slot to connect the TF memory card with the circuit of the connector. In this mode, the connector for inserting and to make circuit connection of an SD, an MMC, an RCMMC, a mini SD and a TF memory card with an electric device can be completed.

Additionally, the first and the second connecting pin sets in the first insertion slot as well as the third connecting pin set in the second insertion slot are all located respectively beneath their corresponding insertion slots, thereby when in insertion of an SD (an MMC, an RCMMC, a mini SD) and a TF memory card, the memory cards are all inserted in a facing down mode to make circuit connection with their corresponding connecting pin sets, so that a user is not subjected to being confused, and an object of being convenient in use can be achieved.

The present invention will be apparent in its structural combination and the entire mode of operation thereof after reading the detailed description of the preferred embodiment thereof in reference to the accompanying drawings.

### BRIEF DESCRIPTION OF THE DRAWINGS

Fig. 1 is a perspective view showing the appearance e of the 5-in-1 connector of the present invention;
Fig. 2 is an exploded perspective view taken from the front side of the 5-in-1 connector of the present invention;
Fig. 3 is an exploded perspective view taken from the back side of the 5-in-1 connector of the present invention;
Fig. 4 is a top view showing the structure of the 5-in-1 connector of the present invention;
Fig. 5 is a bottom view showing the structure of the 5-in-1 connector of the present invention.

### DETAILED DESCRIPTION OF THE PREFERRED EMBODIMENT

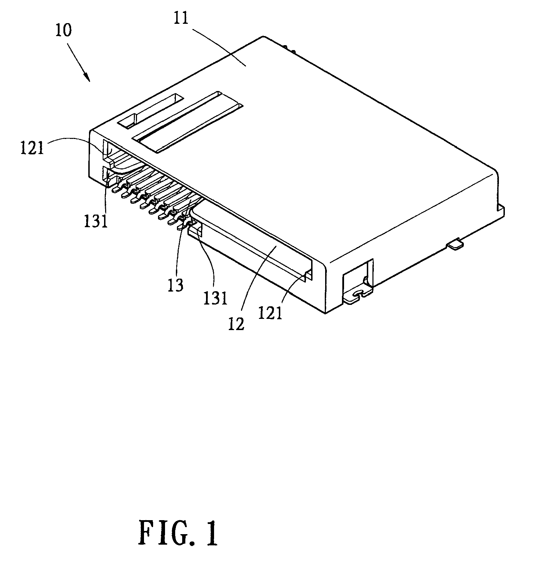

The basic structure combination of the pin system for a 5-in-1 connector for memory cards of the present invention is as shown in Fig. 1, wherein the connector marked with a number 10 has a main body 11 in the form of a cartridge; the main body 11 has a first insertion slot 12 for inserting and positioning one of an SD memory card, an MMC memory card, an RSMMC memory card and a mini SD memory card as well as a second insertion slot 13 for inserting and positioning a TF memory card, and there are a plurality of connecting pin sets arranged in the first and the second slots 12, 13 to make circuit connection of the memory cards with an electric device.

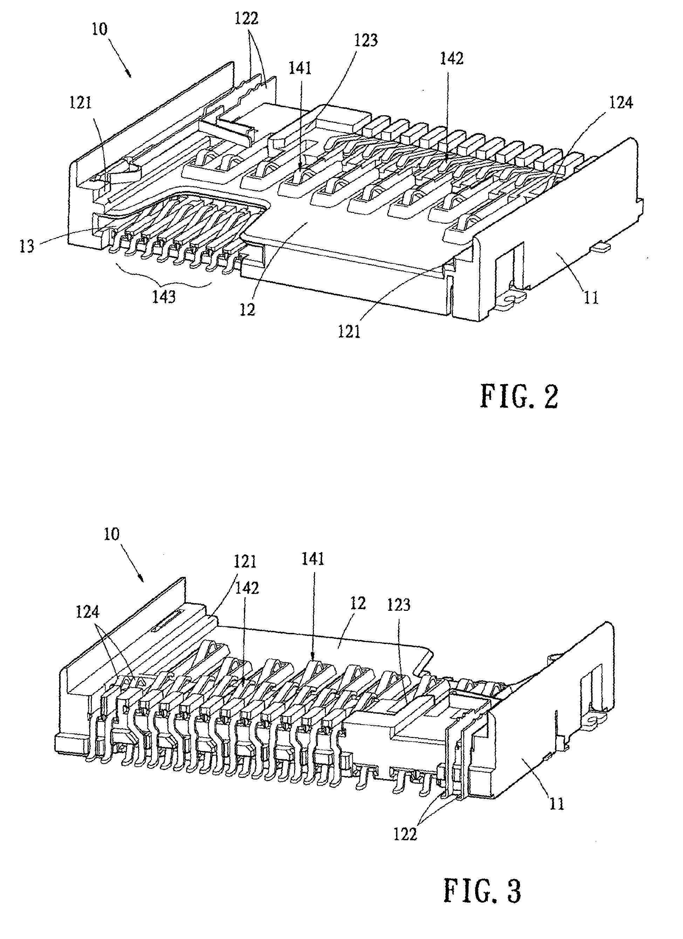

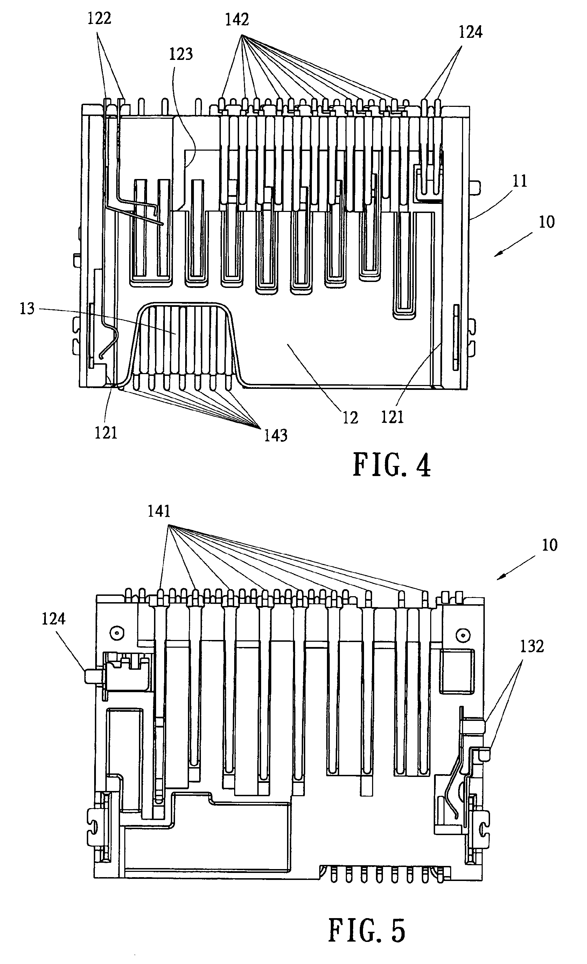

When in practicing particularly, the first and the second slots 12, 13 are arranged one over the other on the front side of the main body 11, such as are shown in Figs. 2 to 5; therefore, a first connecting pin set 141 is provided on the main body 11 at the middle section in the way of insertion inside the first insertion slot 12 to connect one of the SD memory card, the MMC memory card and the RSMMC memory card with the circuit of the connector 10; a second connecting pin set 142 is provided at a deeper area in the way of insertion inside the first insertion slot 12 to connect the mini SD memory card with the circuit of the connector 10, and further a third connecting pin set 143 is provided in the second insertion slot 13 to connect the TF memory card with the circuit of the connector 10. In this mode, the connector 10 for inserting and to make circuit connection of an SD, an MMC, an RCMMC, a mini SD and a TF memory card with an electric device can be completed.

By virtue that the 5-in-1 connector 10 of the present invention is used mainly to make circuit connection of the SD, MMC, RCMMC, mini SD and TF memory cards with the electric device; in the whole connector 10, the first slot 12 has therein a first positioning portion 121 for positioning one of an SDmemory card, an MMC memory card and an RSMMC memory card, and has therein a first sensor 122 to sense whether the SD memory card, the MMC memory card or the RSMMC memory card has been inserted and positioned, when the SD memory card, the MMC memory card or the RSMMC memory card has been inserted and positioned, the first sensor 122 is connected with the circuit, so that transmission of electronic signals can be started, this can prevent wrong actions.

By the same reason, at a deeper area in the way of insertion inside the first insertion slot 12, a second positioning portion 123 is provided for positioning the mini SD memory card, and a second sensor 124 is provided to sense whether the mini SD memory card has been inserted and positioned; and in the second insertion slot 13, a third positioning portion 131 is provided for positioning the TF memory card, and a third sensor 132 is provided to sense whether the TF memory card has been inserted and positioned.

Thereby, the 5-in-1 connector 10 for inserting and to make circuit connection of an SD (an MMC, an RCMMC, a mini SD) and a TF memory card with an electric device can be completed. When in practicing, the connector 10 can be built in the electric device, thus the applicability and convenience of the electric device with an SD (an MMC, an RCMMC, a mini SD) and a TF memory card can be largely increased, thereby the additional function of the entire electric device can be elevated.

One thing is worth mentioning, the first and the second connecting pin sets 141, 142 provided in the first slot 12 as well as the third connecting pin set 143 provided in the second insertion slot 13 are all located respectively beneath their corresponding insertion slots, thereby when in insertion of an SD (an MMC, an RCMMC, a mini SD) and a TF memory card, the memory cards are all inserted in a facing down mode to make circuit connection wi th their corresponding connecting pin sets, so that a user is not subjected to being confused, and an object of being convenient in use can be achieved.

As is stated above, the present invention provides a 5-in-1 connector to make circuit connection of an SD, an MMC, an RCMMC, a mini SD and a TF memory card with an electric device. The above description and drawings are only for illustrating a preferred embodiment of the present invention, and not for giving any limitation to the scope of the present invention. It will be apparent to those skilled in this art that various equivalent modifications or changes without departing from the spirit, scope in structure and arrangement and characteristic of this invention shall also fall within the scope of the appended claims of the present invention.

## Claims

1. A pin system for a 5-in-1 connector (10) for memory cards, said connector (10) has a main body (11) having a first slot (12) for positioning one of an SD memory card, an MMC memory card, an RSMMC memory card and a mini SD memory card, and having a second slot (13) for positioning a TF memory card, said pin system is **characterized in that**:
a first connecting pin set (141) is provided at the middle section in the way of insertion inside said first insertion slot (12) to connect one of said SD memory card, said MMC memory card and said RSMMC memory card wi th a circuit of said connector (10), and a second connecting pin set (142) is provided at a deeper area in said way of insertion inside said first insertion slot (12) to connect said mini SD memory card with said circuit of said connector (10), and further a third connecting pin set (143) is provided in said second insertion slot (13) to connect said TF memory card with said circuit of said connector (10).

2. The pin system for a 5-in-1 connector (10) for memory cards as in claim 1, wherein said first and the second connecting pin sets (141, 142) in said first insertion slot (12) as well as said third connecting pin set (143) in said second insertion slot (13) are all located respectively beneath their corresponding ones of said first and second insertion slots (12, 13).

3. The pin system for a 5-in-1 connector (10) for memory cards as in claim 1, wherein said first and the second slots (12, 13) are arranged one over the other on a front side of said main body (11).

4. The pin system for a 5-in-1 connector (10) for memory cards as in claim 2, wherein said first connecting pin set (141) is provided on said main body (11) at said middle section in said way of insertion inside said first insertion slot (12); said second connecting pin set (142) is provided at a deeper area in said way of insertion inside said first insertion slot (12), and further said third connecting pin set (143) is provided in said second insertion slot (13) on a front side of saidmain body (11).

5. The pin system for a 5-in-1 connector (10) for memory cards as in claim 1, wherein said first slot (12) has therein a first positioning portion (121) for positioning one of an SD memory card, an MMC memory card and an RSMMC memory card, and has therein a first sensor (122) to sense whether said SD memory card, said MMC memory card or said RSMMC memory card has been inserted and positioned; and has therein a second positioning portion (123) for positioning said mini SD memory card, and a second sensor (124) to sense whether said mini SD memory card has been inserted and positioned; and a third positioning portion (131) is provided in said second insertion slot (13) for positioning said TF memory card, and a third sensor (132) is provided to sense whether said TF memory card has been inserted and positioned.

## Amended claims

### Amended claims in accordance with Rule 86(2) EPC.

**1.** a pin system for a 5-in-1 connector (10) for memory cards, said connector (10) having a main body (11) having a first slot (12) for positioning one of an SD memory card, an MMC memory card, an RSMMC memory card and a mini SD memory card, and having a second slot (13) for positioning a TF memory card, said pin system being **characterized in that**:
a first connecting pin set (141) is provided at the middle section in the way of insertion inside said first insertion slot (12) to connect one of said SD memory card, said MMC memory card and said RSMMC memory card with a circuit of said connector (10), and a second connecting pin set (142) is provided at a deeper area in said way of insertion inside said first insertion slot (12) to connect said mini SD memory card with said circuit of said connector (10), and further a third connecting pin set (143) is provided in said second insertion slot (13) to connect said TF memory card with said circuit of said connector (10), and **in that** the first and the second connecting pin sets (141, 142) in said first insertion slot (12) as well as said third connecting pin set (143) in said second insertion slot (13) are all located respectively beneath the corresponding ones of said first and second insertion slots (12,13).

**2.** A pin system for a 5-in-1 connector (10) for memory cards as claimed in claim 1, **characterized in that** the first and the second slots (12,13) are arranged one above the other on a front side of said main body (11).

**3.** A pin system for a 5-in-1 connector (10) for memory cards as claimed in claim 1, **characterized in that** the first connecting pin set (141) is provided on said main body (11) at said middle section in said way of insertion inside said first insertion slot (12); said second connecting pin set (142) is provided at a deeper area in said way of insertion inside said first insertion slot (12), and further said third connecting pin set (143) is provided in said second insertion slot (13) on a front side of said main body (11).

**4.** A pin system for a 5-in-1 connector (10) for memory cards as claimed in claim 1, **characterized in that** said first slot (12) has therein a first positioning portion (121) for positioning one of an SD memory card, an MMC memory card and an RSMMC memory card, and has therein a first sensor (122) to sense whether said SD memory card, said MMC memory card or said RSMMC memory card has been inserted and positioned; and has therein a second positioning portion (123) for positioning said mini SD memory card, and a second sensor (124) to sense whether said mini SD memory card has been inserted and positioned; and a third positioning portion (131) is provided in said second insertion slot (13) for positioning said TF memory card, and a third sensor (132) is provided to sense whether said TF memory card has been inserted and positioned.
